# EUROPÄISCHE PATENTSCHRIFT

(11) **EP 3 063 434 B1**
(45) Veröffentlichungstag und Bekanntmachung des Hinweises auf die Patenterteilung: **31.07.2019**
(21) Anmeldenummer: 14777298.2
(22) Anmeldetag: 26.09.2014
(51) Int. Cl.: F16H 59/12, F16H 61/18, G05G 1/00, G05G 1/04

(54) **VORRICHTUNG UND VERFAHREN ZUM WÄHLEN EINER BETRIEBSART EINES GETRIEBES EINES FAHRZEUGS SOWIE SYSTEM ZUM EINSTELLEN EINER BETRIEBSART EINES GETRIEBES EINES FAHRZEUGS**
DEVICE AND METHOD FOR SELECTING AN OPERATING MODE OF A TRANSMISSION OF A VEHICLE AND SYSTEM FOR SETTING AN OPERATING MODE OF A TRANSMISSION OF A VEHICLE
DISPOSITIF ET PROCÉDÉ DE SÉLECTION D'UN MODE DE FONCTIONNEMENT D'UNE BOÎTE DE VITESSE D'UN VÉHICULE AINSI QUE SYSTÈME DE SÉLECTION D'UN MODE DE FONCTIONNEMENT D'UNE BOÎTE DE VITESSE D'UN VÉHICULE

(30) Priorität: 31.10.2013 DE 102013222203
(43) Veröffentlichungstag der Anmeldung: 07.09.2016
(73) Patentinhaber: ZF Friedrichshafen AG, 88046 Friedrichshafen (DE); Lemförder-Electronic GmbH, 32339 Espelkamp (DE)
(72) Erfinder: PFEIFER, Ralf, 49356 Diepholz (DE); PEUKERT, Andreas, 49406 Barnstorf (DE)
(74) Vertreter: Riegel, Werner
(86) Internationale Anmeldenummer: PCT/EP2014/070597
(87) Internationale Veröffentlichungsnummer: WO 2015/062794

(56) Entgegenhaltungen:
- EP-A2- 2 017 688
- DE-A1- 10 208 387
- DE-A1- 10 212 777
- DE-A1-102009 031 649
- DE-A1-102011 089 980
- US-A1- 2013 100 021

## Beschreibung

Die vorliegende Erfindung bezieht sich auf eine Vorrichtung zum Wählen einer Betriebsart eines Getriebes eines Fahrzeugs, auf ein System zum Einstellen einer Betriebsart eines Getriebes eines Fahrzeugs sowie auf ein Verfahren zum Wählen einer Betriebsart eines Getriebes eines Fahrzeugs.

Tastenschalter als Schaltvorrichtung zum Schalten von Fahrzeuggetrieben, insbesondere Automatikgetrieben, finden immer weitere Verbreitung. Dabei ist aus Sicherheitserwägungen insbesondere eine Freigabe einer Wählhandlung vorzusehen, wie bei einem Wählhebel eines Automatikgetriebes.

Die DE 102 12 777 A1 offenbart ein Kraftfahrzeug mit einem über ein shift-by-wire-System geschalteten Automatikgetriebe, mit den Merkmalen des Oberbegriffs des Anspruchs 1. Die DE 10 2006 019 065 A1 offenbart eine Eingabeschnittstelle für ein Fahrzeugcockpit zur Generierung von Steuersignalen, mit einem Schalthebel, wobei der Schalthebel einen Knaufkopf aufweist, der eine Fingerauflagefläche bildet, wobei sich der Schalthebel dadurch auszeichnet, dass in diesem eine Erfassungseinrichtung vorgesehen ist zur Generierung eines Ausgangssignals nach Maßgabe der Position eines Fingers auf der Fingerauflagefläche.

Vor diesem Hintergrund schafft die vorliegende Erfindung eine verbesserte Vorrichtung zum Wählen einer Betriebsart eines Getriebes eines Fahrzeugs, ein verbessertes System zum Einstellen einer Betriebsart eines Getriebes eines Fahrzeugs sowie ein verbessertes Verfahren zum Wählen einer Betriebsart eines Getriebes eines Fahrzeugs gemäß den Hauptansprüchen. Vorteilhafte Ausgestaltungen ergeben sich aus den Unteransprüchen und der nachfolgenden Beschreibung.

Gemäß Ausführungsformen der vorliegenden Erfindung kann insbesondere ein berührungssensitiver Tastenschalter für eine Freigabetaste zum Wählen einer Betriebsart, beispielsweise einer Fahrstufe, eines Getriebes eines Fahrzeugs auf vorteilhafte Weise verwendet werden. Das Grundprinzip eines solchen berührungsempfindlichen bzw. berührungssensitiven Tastenschalters kann beispielsweise auf einem Sensorschalter basieren, bei dem ein Sensorstromkreis für eine Schaltfunktion vorgesehen ist. Dabei kann der Sensorstromkreis mit einem offenen Abschnitt zwischen dem Tastenschalter und einer Betätigungseinrichtung im Fahrzeuginnenraum ausgeführt sein, wobei der Sensorstromkreis durch Überbrücken des offenen Abschnitts mittels eines von einem Fahrzeuglenker ausgeführten Bedienvorgangs schließbar ist, um das Wählen der Betriebsart des Getriebes freizugeben bzw. zu ermöglichen.

Vorteilhafterweise kann gemäß Ausführungsformen der vorliegenden Erfindung ein unbeabsichtigtes bzw. versehentliches Wählen einer Betriebsart eines Getriebes eines Fahrzeugs vermieden werden, indem dagegen eine zuverlässige Sicherung und Freigabe bereitgestellt wird. So kann eine Betriebssicherheit bzw. Verkehrssicherheit auf einfache Weise gesteigert werden. Das vorgestellte Konzept zur Sicherung und Freigabe ist ungefährlich, intuitiv und sicher.

Die vorliegende Erfindung betrifft eine Vorrichtung zum Wählen einer Betriebsart eines Getriebes eines Fahrzeugs, wobei die Vorrichtung ein Bedienfeld mit zumindest einem Wählschalter zum Wählen einer Betriebsart und einem Freigabeschalter zum Freigeben einer Funktion des zumindest einen Wählschalters aufweist, dadurch gekennzeichnet, dass der Freigabeschalter einen berührungsempfindlichen Tastenschalter als eine erste Schnittstelle zu einem Sensorstromkreis zum Freigeben der Funktion des zumindest einen Wählschalters aufweist, wobei der Sensorstromkreis eine zweite Schnittstelle an einer Betätigungseinrichtung für eine Fahrfunktion des Fahrzeugs aufweist, wobei der Sensorstromkreis durch Herstellen einer elektrisch leitfähigen Verbindung zwischen der ersten Schnittstelle und der zweiten Schnittstelle über einen Fahrerbereich eines Innenraums des Fahrzeugs schließbar ist. Die erste Schnittstelle und die zweite Schnittstelle sind ausgebildet, um bei Berührung der ersten Schnittstelle und der zweiten Schnittstelle durch einen Fahrer des Fahrzeugs den Sensorstromkreis durch den Fahrer des Fahrzeugs hindurch zu schließen.

Bei dem Fahrzeug kann es sich um ein Kraftfahrzeug, beispielsweise ein straßengebundenes Kraftfahrzeug, wie einen Personenkraftwagen oder einen Lastkraftwagen handeln. Bei der Vorrichtung kann es sich um eine Tastenschaltvorrichtung zur Auswahl einer Fahrstufe bzw. Getriebestufe eines Kraftfahrzeuggetriebes, insbesondere eines automatischen Getriebes handeln. Bei dem berührungssensitiven Tastenschalter kann eine Netzspannung gegen ein Referenzpotential bzw. Massepotential des Fahrzeugs gemessen werden. Solange die Schnittstellen des Sensorstromkreises ohne Berührung sind, fließt kein Strom oder beinahe kein Strom bei voller Spannung. Wenn durch eine Person beide Schnittstellen berührt werden, kann ein kleiner Strom über die Person zu Masse fließen, wobei die Spannung abfällt. Ein solcher Stromfluss oder Spannungsabfall kann von der Vorrichtung erkannt werden und in eine Freigabe bzw. ein Freigabesignal zum Freigeben der Funktion des zumindest einen Wählschalters umgesetzt werden. Der Sensorstromkreis kann ausgebildet sein, um durch Berührung beider Schnittstellen durch eine Person, insbesondere einen Fahrer des Fahrzeugs, geschlossen zu werden. Hierbei kann ein schwacher elektrischer Strom durch den Körper der Person bzw. des Fahrers des Fahrzeugs fließen, um das Schließen des Stromkreises zu ermöglichen. Die zweite Schnittstelle kann als eine Elektrode bzw. als eine kapazitive oder induktive Übertragungseinrichtung zum Überleiten von elektrischem Strom zwischen dem Sensorstromkreis und dem Körper der Person ausgeformt sein.

Gemäß einer Ausführungsform kann die Vorrichtung eine elektrische Schaltung mit einer Erfassungseinrichtung zum Erfassen eines elektrischen Stroms in dem Sensorstromkreis aufweisen. Hierbei kann die elektrische Schaltung ausgebildet sein, um die Funktion des zumindest einen Wählschalters in Abhängigkeit von dem erfassten Strom in dem Sensorstromkreis freizugeben. Die elektrische Schaltung kann als eine Logikschaltung, Logikeinrichtung oder dergleichen ausgeführt sein. Eine solche Ausführungsform bietet den Vorteil, dass anhand der Erfassung des elektrischen Stromes eine Freigabe des Wählschalters besonders einfach und sicher realisiert werden kann.

Dabei kann die elektrische Schaltung ausgebildet sein, um die Funktion des zumindest einen Wählschalters freizugeben, wenn durch die Erfassungseinrichtung bei geschlossenem Sensorstromkreis ein elektrischer Strom in dem Sensorstromkreis erfasst wird. Die Erfassungseinrichtung kann ausgebildet sein, um die Funktion des zumindest einen Wählschalters freizugeben, wenn mittels der Erfassungseinrichtung ein elektrischer Strom, der einen geschlossenen Sensorstromkreis repräsentiert, in dem Sensorstromkreis erfasst wird. Eine solche Ausführungsform bietet den Vorteil, dass unter Verwendung des erfassten elektrischen Stromes eine Freigabe des Wählschalters besonders zuverlässig erfolgen kann.

Vorteilhaft ist es auch, wenn die Betätigungseinrichtung eine Betätigungseinrichtung für eine Betriebsbremse des Fahrzeugs ist. Dabei kann die Betätigungseinrichtung für die Betriebsbremse ein Bremspedal oder dergleichen sein. Eine solche Ausführungsform bietet den Vorteil, dass die Tastenschaltung nur durch den Fahrer aktiviert werden kann, da nur er den Sensorstromkreis zwischen Bremspedal bzw. Bremsbetätiger und Tastenschaltung schließen kann. Grundsätzlich kann der Sensorstromkreis beispielsweise über jede durch einen Fahrer erreichbare Stelle im Fahrzeug geschlossen werden, allerdings wird der Fahrer zum Schalten ohnehin auf das Bremspedal treten bzw. die Betriebsbremse betätigen.

Auch kann ein weiterer Sensorstromkreis zum Freigeben der Funktion des zumindest einen Wählschalters vorgesehen sein. Hierbei kann der Freigabeschalter eine erste Schnittstelle des weiteren Sensorstromkreises repräsentieren, wobei der weitere Sensorstromkreis eine zweite Schnittstelle an einer Betätigungseinrichtung für eine Motorleistung des Fahrzeugs aufweisen kann. Dabei kann der weitere Sensorstromkreis durch Herstellen einer elektrisch leitfähigen Verbindung zwischen der ersten Schnittstelle und der zweiten Schnittstelle über einen Fahrerbereich eines Innenraums des Fahrzeugs schließbar sein. Die Betätigungseinrichtung für eine Motorleistung kann ein Gaspedal oder dergleichen sein. Die elektrische Schaltung und die Erfassungseinrichtung können an den weiteren Sensorstromkreis angeschlossen sein. Die elektrische Schaltung und die Erfassungseinrichtung können ausgebildet sein, um einen elektrischen Stromfluss in dem Sensorstromkreis und in dem weiteren Sensorstromkreis zu überwachen. Dabei kann die elektrische Schaltung ausgebildet sein, um in Abhängigkeit von einer zeitlichen Abfolge eines erfassten, elektrischen Stroms in dem Sensorstromkreis und in dem weiteren Sensorstromkreis die Funktion des zumindest einen Wählschalters freizugeben. Eine solche Ausführungsform bietet den Vorteil, dass für bestimmte Situationen, wie beispielsweise ein Herausschaukeln bei festgefahrenem Fahrzeug, auch ein zweites Bedienelement, insbesondere das Gaspedal oder eine vergleichbare Einrichtung, genutzt werden kann. So kann das Durchführen einer Änderung der Betriebsart des Fahrzeuggetriebes unter Beibehaltung der Sicherung gegen versehentliches Schalten flexibilisiert werden, um auch ungewöhnlichen Fahrsituationen gerecht werden zu können.

Gemäß einer Ausführungsform kann die elektrische Schaltung ausgebildet sein, um die Funktion des zumindest einen Wählschalters in Abhängigkeit von einer Art einer durch den zumindest einen Wählschalter wählbaren Betriebsart freizugeben. Hierbei kann die elektrische Schaltung ausgebildet sein, um die Funktion des zumindest einen Wählschalters abhängig oder unabhängig von einem elektrischen Strom in dem Sensorstromkreis freizugeben. Insbesondere kann die elektrische Schaltung ausgebildet sein, um die Funktion des zumindest einen Wählschalters in Abhängigkeit von einer Eigenschaft der durch den zumindest einen Wählschalter gewählten Betriebsart und/oder einer aktuell vorliegenden Betriebsart die Funktion des zumindest einen Wählschalters freizugeben. Eine solche Ausführungsform bietet den Vorteil, dass in definierbaren Situationen bestimmte Gangwahlen erlaubt sein können, ohne dass die Sensorik einen geschlossenen Sensorstromkreis meldet. Für manche Gangwahlen könnte somit also sogar zugelassen sein, dass zum Wählen der Betriebsart nur ein Tastendruck eines Wählschalters benötigt wird, ohne dass beispielsweise die Bremse betätigt wird.

Ferner kann die Vorrichtung einen Bewegungssensor zum Freigeben der Funktion des zumindest einen Wählschalters an einer Betätigungseinrichtung für eine Betriebsbremse des Fahrzeugs aufweisen. Der Bewegungssensor kann einen Bremslichtschalter aufweisen oder repräsentieren. Dabei kann der Bewegungssensor ausgebildet sein, um eine Bewegung der Betätigungseinrichtung für die Betriebsbremse des Fahrzeugs zu erfassen. So kann der Bewegungssensor ausgebildet sein, um die Funktion des zumindest einen Wählschalters freizugeben, wenn die Betätigungseinrichtung für die Betriebsbremse in einem betätigten Zustand ist. Der Bewegungssensor kann einen Bremslichtschalter aufweisen oder repräsentieren. Hierbei kann der Bremslichtschalter in dem betätigten Zustand der Betätigungseinrichtung für die Betriebsbremse ein Signal für eine Lichtsteuerung von Bremslicht bereitstellen. Eine Freigabe mittels des Bewegungssensors kann zusätzlich oder alternativ zu einer Freigabe mittels des Sensorstromkreises erfolgen. Eine solche Ausführungsform bietet den Vorteil, dass eine weitere Variante einer Absicherung gegen unbeabsichtigte Gangwahl integrierbar und realisierbar ist.

Die vorliegende Erfindung betrifft auch ein System zum Einstellen einer Betriebsart eines Getriebes eines Fahrzeugs, wobei das System eine Vorrichtung zum Wählen einer Betriebsart des Getriebes und eine Vorrichtung zum Steuern des Getriebes aufweist, dadurch gekennzeichnet, dass es sich bei der Vorrichtung zum Wählen um eine Ausführungsform der vorstehend genannten Vorrichtung zum Wählen handelt, wobei die Vorrichtung zum Steuern ausgebildet ist, um zum Einstellen der Betriebsart das Getriebe in Abhängigkeit von einer mittels der Vorrichtung zum Wählen gewählten Betriebsart zu steuern.

In Verbindung mit dem System zum Einstellen einer Betriebsart eines Getriebes eines Fahrzeugs kann eine Ausführungsform der vorstehend genannten Vorrichtung zum Wählen einer Betriebsart eines Getriebes vorteilhaft eingesetzt bzw. verwendet werden. Bei der Vorrichtung zum Steuern des Getriebes kann es sich um ein Getriebesteuergerät handeln. Eine Ausführungsform des vorstehend genannten Systems kann vorteilhaft eingesetzt bzw. verwendet werden, um eine Betriebsart eines Getriebes eines Fahrzeugs einzustellen.

Die vorliegende Erfindung betrifft auch ein Verfahren zum Wählen einer Betriebsart eines Getriebes eines Fahrzeugs, wobei das Verfahren in Verbindung mit einer Vorrichtung zum Wählen einer Betriebsart des Getriebes ausgeführt wird, wobei die Vorrichtung ein Bedienfeld mit zumindest einem Wählschalter zum Wählen einer Betriebsart und einem Freigabeschalter zum Freigeben einer Funktion des zumindest einen Wählschalters aufweist, wobei das Verfahren folgende Schritte aufweist:
Einlesen eines Freigabesignals von dem Freigabeschalter, wobei der Freigabeschalter einen berührungsempfindlichen Tastenschalter als eine erste Schnittstelle zu einem Sensorstromkreis zum Freigeben der Funktion des zumindest einen Wählschalters aufweist, wobei der Sensorstromkreis eine zweite Schnittstelle an einer Betätigungseinrichtung für eine Fahrfunktion des Fahrzeugs aufweist, wobei der Sensorstromkreis durch Herstellen einer elektrisch leitfähigen Verbindung zwischen der ersten Schnittstelle und der zweiten Schnittstelle über einen Fahrerbereich eines Innenraums des Fahrzeugs schließbar ist; und
Erzeugen eines Wählsignals, das eine gewählte Betriebsart des Getriebes repräsentiert, in Abhängigkeit von dem Freigabesignal und einem Betätigungssignal von dem zumindest einen Wählschalter.

Das Verfahren kann in Verbindung mit einer Ausführungsform der vorstehend genannten Vorrichtung zum Wählen und/oder des vorstehend genannten Systems zum Einstellen vorteilhaft ausgeführt werden, um eine Betriebsart eines Getriebes eines Fahrzeugs zu wählen. Dabei kann das Freigabesignal von dem Freigabeschalter eingelesen oder durch denselben bereitgestellt werden, wenn der Sensorstromkreis geschlossen ist bzw. als geschlossen erkannt ist.

Die Erfindung wird anhand der beigefügten Zeichnungen beispielhaft näher erläutert. Es zeigen:
- Fig. 1: eine schematische Darstellung eines Fahrzeugs mit einem System zum Einstellen einer Betriebsart eines Getriebes eines Fahrzeugs gemäß einem Ausführungsbeispiel der vorliegenden Erfindung; und
- Fig. 2: ein Ablaufdiagramm eines Verfahrens zum Wählen einer Betriebsart eines Getriebes eines Fahrzeugs gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

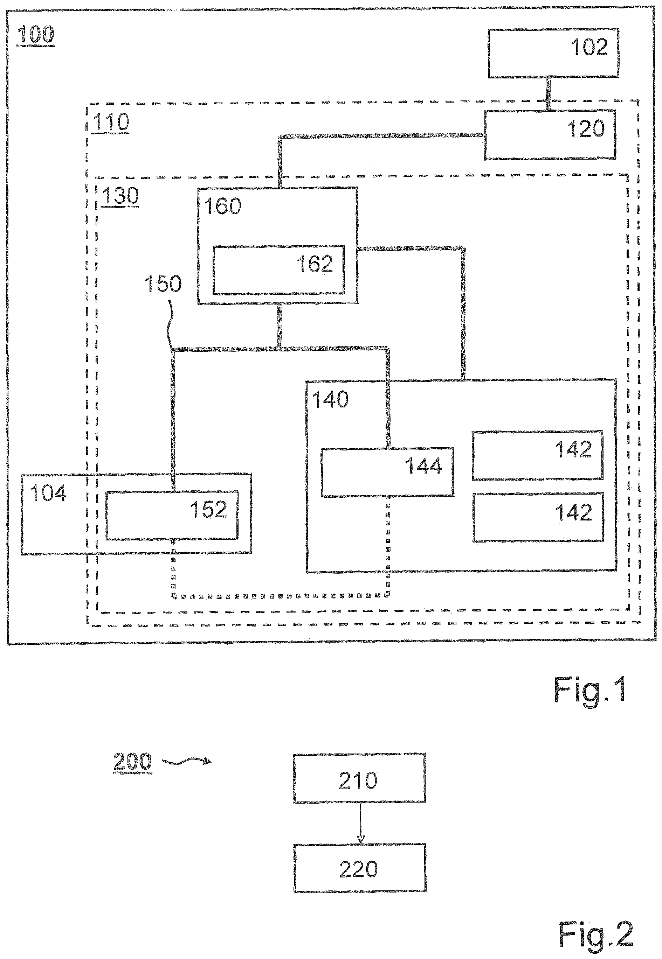

Fig. 1 zeigt eine schematische Darstellung eines Fahrzeugs mit einem System zum Einstellen einer Betriebsart eines Getriebes eines Fahrzeugs gemäß einem Ausführungsbeispiel der vorliegenden Erfindung. Gezeigt sind von dem Fahrzeug 100 hierbei ein Getriebe 102, eine Betätigungseinrichtung 104 für eine Fahrfunktion, das System 110 zum Einstellen der Betriebsart, eine Steuervorrichtung 120 bzw. Vorrichtung zum Steuern des Getriebes 102, eine Wählvorrichtung 130 bzw. Vorrichtung zum Wählen der Betriebsart, ein Bedienfeld 140, lediglich beispielhaft zwei Wählschalter 142, ein Freigabeschalter 144, ein Sensorstromkreis 150, eine Elektrode 152, eine elektrische Schaltung 160 bzw. Logik und eine Erfassungseinrichtung 162 bzw. eine Strommesseinrichtung bzw. ein Amperemeter.

Das Fahrzeug 100 ist ein Kraftfahrzeug, beispielsweise ein Personenkraftwagen, Lastkraftwagen oder Nutzfahrzeug. Das Fahrzeug 100 weist das Getriebe 102, die Betätigungseinrichtung 104 und das System 110 auf. Bei dem Getriebe 102 handelt es sich gemäß dem in Fig. 1 dargestellten Ausführungsbeispiel der vorliegenden Erfindung um ein Automatikgetriebe. Gemäß dem in Fig. 1 gezeigten Ausführungsbeispiel der vorliegenden Erfindung ist die Betätigungseinrichtung 104 eine Betätigungseinrichtung für eine Betriebsbremse des Fahrzeugs 100. Die Betätigungseinrichtung 104 für die Fahrfunktion repräsentiert somit beispielsweise ein Bremspedal des Fahrzeugs 100.

Das System 110 zum Einstellen einer Betriebsart des Getriebes 102 des Fahrzeugs 100 weist die Steuervorrichtung 120, die auch als ein Getriebesteuergerät bezeichnet werden kann, und die Wählvorrichtung 130 auf. Die Steuervorrichtung 120 ist signalübertragungsfähig mit dem Getriebe 102 verbunden. Die Steuervorrichtung 120 ist ausgebildet, um zum Einstellen der Betriebsart das Getriebe 102 in Abhängigkeit von einer mittels der Wählvorrichtung 130 gewählten Betriebsart zu steuern. Die Wählvorrichtung 130 ist signalübertragungsfähig mit der Steuervorrichtung 120 verbunden. Die Wählvorrichtung 130 weist das Bedienfeld 140, den Sensorstromkreis 150 und die elektrische Schaltung 160 auf.

Das Bedienfeld 140 der Wählvorrichtung 130 weist die beispielhaft zwei Wählschalter 142 und den Freigabeschalter 144 auf. Die Wählschalter 142 sind zum Wählen der Betriebsart des Getriebes 102 ausgebildet. Das Bedienfeld 140 kann gemäß einem anderen Ausführungsbeispiel einen Wählschalter 142 oder mehr als zwei Wählschalter 142 aufweisen. Der Freigabeschalter 144 ist ausgebildet, um eine Funktion der Wählschalter 142 freizugeben. Wenn der Freigabeschalter 144 betätigt ist, ist die Funktion der Wählschalter 142 freigegeben. Der Freigabeschalter 144 ist als ein berührungsempfindlicher Tastenschalter ausgeführt.

Der Sensorstromkreis 150 weist den Freigabeschalter 144 als eine erste Schnittstelle und die Elektrode 152 als eine zweite Schnittstelle auf. Die Elektrode 152 ist an der Betätigungseinrichtung 104 angeordnet. Der Sensorstromkreis 150 ist zum Freigeben der Funktion der Wählschalter 142 vorgesehen. Hierbei sind der Freigabeschalter 144 und die Elektrode 152 in dem Sensorstromkreis 150 miteinander in Reihe geschaltet. Der Sensorstromkreis 150 ist durch Herstellen einer elektrisch leitfähigen Verbindung zwischen der ersten Schnittstelle, das heißt dem Freigabeschalter 144, und der zweiten Schnittstelle, das heißt der Elektrode 152, über einen Fahrerbereich eines Innenraums des Fahrzeugs 100 schließbar. Der Sensorstromkreis 150 ist hierbei mittels eines Körpers insbesondere eines Fahrers des Fahrzeugs 100 galvanisch schließbar, wenn der Fahrer sowohl den Freigabeschalter 144 als auch die Elektrode 152 berührt. Wenn der Sensorstromkreis 150 geschlossen ist, ist die Funktion der Wählschalter 142 freigegeben oder freigebbar. Der schließbare Abschnitt des Sensorstromkreises 150 ist in Fig. 1 symbolisch mittels einer unterbrochenen Linie veranschaulicht.

Die elektrische Schaltung 160 weist die Erfassungseinrichtung 162 auf. Dabei ist die Erfassungseinrichtung 162 ausgebildet, um einen elektrischen Strom bzw. einen elektrischen Stromfluss in dem Sensorstromkreis 150 zu erfassen. Dabei ist die elektrische Schaltung 160 ausgebildet, um die Funktion der Wählschalter 142 in Abhängigkeit von dem erfassten Strom in dem Sensorstromkreis 150 freizugeben. Dazu ist die elektrische Schaltung 160 mit dem Sensorstromkreis 150 signalübertragungsfähig verbunden. Zudem ist die elektrische Schaltung 160 mit dem Bedienfeld 140 signalübertragungsfähig verbunden. Auch ist die elektrische Schaltung 160 mit der Steuervorrichtung 120 signalübertragungsfähig verbunden. Genau gesagt ist die elektrische Schaltung 160 ausgebildet, um die Funktion der Wählschalter 142 freizugeben, wenn durch die Erfassungseinrichtung 162 bei geschlossenem Sensorstromkreis 150 ein elektrischer Strom in dem Sensorstromkreis 150 erfasst wird.

Gemäß einem Ausführungsbeispiel weist die Wählvorrichtung 130 einen weiteren Sensorstromkreis zum Freigeben der Funktion der Wählschalter 142 auf. Dabei repräsentiert der Freigabeschalter 144 eine erste Schnittstelle des weiteren Sensorstromkreises. Der weitere Sensorstromkreis weist eine zweite Schnittstelle an einer Betätigungseinrichtung für eine Motorleistung des Fahrzeugs 100 auf, das heißt beispielsweise an einem Gaspedal. Auch der weitere Sensorstromkreis ist durch Herstellen einer elektrisch leitfähigen Verbindung zwischen der ersten Schnittstelle und der zweiten Schnittstelle über den Fahrerbereich des Innenraums des Fahrzeugs 100 schließbar.

Gemäß einem Ausführungsbeispiel ist die elektrische Schaltung 160 ausgebildet ist, um die Funktion der Wählschalter 142 in Abhängigkeit von einer Art einer durch die Wählschalter 142 wählbaren Betriebsart freizugeben. Gemäß einem Ausführungsbeispiel weist die Wählvorrichtung 130 einen Bewegungssensor zum Freigeben der Funktion der Wählschalter 142 an einer Betätigungseinrichtung für eine Betriebsbremse bzw. an einem Bremspedal des Fahrzeugs 100 auf.

Für die zumindest einen Tastenschalter aufweisende Wählvorrichtung 130 bzw. Vorrichtung zum Wählen einer Betriebsart des Getriebes 102 des Fahrzeugs 100 ist der Sensorstromkreis 150 gemäß einem Ausführungsbeispiel der vorliegenden Erfindung zwischen der Betätigungseinrichtung 104 bzw. dem Bremspedal und dem Freigabeschalter 144 der Tastenschaltung bzw. des Bedienfelds 140 aufgebaut. Wenn beispielsweise ein Fahrer das Bremspedal tritt, das heißt die Betätigungseinrichtung 104 betätigt, signalisiert ein Bremslichtschalter die Betätigung an das System 110, sodass eine erste Sicherung gegen einen unbeabsichtigten Gangwechsel aufgehoben werden kann. Der Fahrer schließt dann beispielsweise den Sensorstromkreis 150 über seinen Fuß auf der Elektrode 152 an der Betätigungseinrichtung 104 sowie durch Drücken der Freigabetaste 144 auf dem Bedienfeld 140 bzw. Tastenschalter, sodass der Sensorstromkreis 150 durch den Fahrer vollständig geschlossen ist, wodurch eine zweite Sicherung gegen einen unbeabsichtigten Gangwechsel aufgehoben wird. Durch Drücken eines Wählschalters 142 auf dem Bedienfeld 140 bzw. Tastenschalter kann dann ein Gang bzw. eine Betriebsart gewählt werden.

Für eine Wählvorrichtung 130 bzw. Gangschaltung für einen Fahrzeuge 100, die über Tasten die Auswahl einer geeigneten Übersetzung bzw. eines Gangs oder eines Fahrprogrammes mit einer automatischen Übersetzungsanpassung bzw. Fahrstufe ermöglicht, ist somit hierbei vorgesehen, einen Stromfluss zur Freigabetaste 144 zu erfassen. Dabei erfolgt ein Stromfluss von/zur Freigabetaste 144 über die Elektrode 152 an der Betätigungseinrichtung 104, somit über ein anderes Bedienelement des Fahrzeugs 100. Hierbei stellt der Fahrer den Stromfluss durch gleichzeitige Berührung von Freigabetaste 144 und zweiter Schnittstelle bzw. der Elektrode 152 an der Betätigungseinrichtung 104 her, wobei der Stromfluss in dem Sensorstromkreis 150 mittels der Fassungseinrichtung 162 erfasst bzw. gemessen wird. Die elektrische Schaltung 160 ist hierbei ausgebildet, um dem Stromfluss eine Bedeutung beizumessen. Dabei ist die Wählvorrichtung 130 ausgebildet, um der Steuervorrichtung 120 und somit auch dem Getriebe 102 die Freigabe zur Entgegennahme Umsetzung bzw. des durch Tastendruck repräsentierten Fahrerwunsches zu erteilen. Hierbei ist die zweite Schnittstelle des Senderstromkreises 150 lediglich beispielhaft an der Betätigungseinrichtung 104 für die Betriebsbremse angeordnet, z. B. an einem Fußbremspedal oder in Behindertenfahrzeugen an einer anderen Einrichtung.

Fig. 2 zeigt ein Ablaufdiagramm eines Verfahrens 200 zum Wählen einer Betriebsart eines Getriebes eines Fahrzeugs gemäß einem Ausführungsbeispiel der vorliegenden Erfindung. Dabei ist das Verfahren 200 in Verbindung mit einer Vorrichtung zum Wählen einer Betriebsart des Getriebes ausführbar. Hierbei weist die Vorrichtung ein Bedienfeld mit zumindest einem Wählschalter zum Wählen einer Betriebsart und einem Freigabeschalter zum Freigeben einer Funktion des zumindest einen Wählschalters auf. Insbesondere ist das Verfahren 200 in Verbindung mit dem System bzw. der Vorrichtung zum Wählen aus Fig. 1 vorteilhaft ausführbar.

Das Verfahren 200 weist einen Schritt 210 des Einlesens eines Freigabesignals von dem Freigabeschalter auf. Dabei weist der Freigabeschalter einen berührungsempfindlichen Tastenschalter als eine erste Schnittstelle zu einem Sensorstromkreis zum Freigeben der Funktion des zumindest einen Wählschalters auf, wobei der Sensorstromkreis eine zweite Schnittstelle an einer Betätigungseinrichtung für eine Fahrfunktion des Fahrzeugs aufweist. Hierbei ist der Sensorstromkreis durch Herstellen einer elektrisch leitfähigen Verbindung zwischen der ersten Schnittstelle und der zweiten Schnittstelle über einen Fahrerbereich eines Innenraums des Fahrzeugs schließbar.

Dabei wird das Freigabesignal von dem Freigabeschalter 144 eingelesen oder durch den Freigabeschalter 144 bereitgestellt, wenn der Sensorstromkreis 150 geschlossen ist bzw. durch die Erfassungseinrichtung 162 und/oder die elektrische Schaltung 160 als geschlossen erkannt ist.

Das Verfahren 200 weist ferner einen Schritt 220 des Erzeugens eines Wählsignals, das eine gewählte Betriebsart des Getriebes repräsentiert, in Abhängigkeit von dem Freigabesignal und einem Betätigungssignal von dem zumindest einen Wählschalter auf.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Fahrzeug
- 102: Getriebe
- 104: Betätigungseinrichtung
- 110: System zum Einstellen
- 120: Vorrichtung zum Steuern
- 130: Vorrichtung zum Wählen
- 140: Bedienfeld
- 142: Wählschalter
- 144: Freigabeschalter
- 150: Sensorstromkreis
- 152: Elektrode
- 160: elektrische Schaltung
- 162: Erfassungseinrichtung
- 200: Verfahren zum Wählen
- 210: Schritt des Einlesens
- 220: Schritt des Erzeugens

## Patentansprüche

1. Vorrichtung (130) zum Wählen einer Betriebsart eines Getriebes (102) eines Fahrzeugs (100), wobei die Vorrichtung (130) ein Bedienfeld (140) mit zumindest einem Wählschalter (142) zum Wählen einer Betriebsart und einem Freigabeschalter (144) zum Freigeben einer Funktion des zumindest einen Wählschalters (142) aufweist, wobei der Freigabeschalter (144) einen berührungsempfindlichen Tastenschalter als eine erste Schnittstelle zu einem Sensorstromkreis (150) zum Freigeben der Funktion des zumindest einen Wählschalters (142) aufweist, wobei der Sensorstromkreis (150) eine zweite Schnittstelle (152) an einer Betätigungseinrichtung (104) für eine Fahrfunktion des Fahrzeugs (100) aufweist, wobei der Sensorstromkreis (150) durch Herstellen einer elektrisch leitfähigen Verbindung zwischen der ersten Schnittstelle und der zweiten Schnittstelle (152) über einen Fahrerbereich eines Innenraums des Fahrzeugs (100) schließbar ist, **dadurch gekennzeichnet, dass** die erste Schnittstelle und die zweite Schnittstelle (152) ausgebildet sind, um bei Berührung der ersten Schnittstelle und der zweiten Schnittstelle (152) durch einen Fahrer des Fahrzeugs (100) den Sensorstromkreis (150) durch den Fahrer des Fahrzeugs (100) hindurch zu schließen.

2. Vorrichtung (130) gemäß Anspruch 1, **gekennzeichnet durch** eine elektrische Schaltung (160) mit einer Erfassungseinrichtung (162) zum Erfassen eines elektrischen Stroms in dem Sensorstromkreis (150), wobei die elektrische Schaltung (160) ausgebildet ist, um die Funktion des zumindest einen Wählschalters (142) in Abhängigkeit von dem erfassten Strom in dem Sensorstromkreis (150) freizugeben.

3. Vorrichtung (130) gemäß Anspruch 2, **dadurch gekennzeichnet, dass** die elektrische Schaltung (160) ausgebildet ist, um die Funktion des zumindest einen Wählschalters (142) freizugeben, wenn durch die Erfassungseinrichtung (162) bei geschlossenem Sensorstromkreis (150) ein elektrischer Strom in dem Sensorstromkreis (150) erfasst wird.

4. Vorrichtung (130) gemäß einem der vorangegangenen Ansprüche, **dadurch gekennzeichnet, dass** die Betätigungseinrichtung (104) eine Betätigungseinrichtung für eine Betriebsbremse des Fahrzeugs (100) ist.

5. Vorrichtung (130) gemäß einem der vorangegangenen Ansprüche, **gekennzeichnet durch** einen weiteren Sensorstromkreis zum Freigeben der Funktion des zumindest einen Wählschalters (142), wobei der Freigabeschalter (144) eine erste Schnittstelle des weiteren Sensorstromkreises repräsentiert, wobei der weitere Sensorstromkreis eine zweite Schnittstelle an einer Betätigungseinrichtung für eine Motorleistung des Fahrzeugs (100) aufweist, wobei der weitere Sensorstromkreis durch Herstellen einer elektrisch leitfähigen Verbindung zwischen der ersten Schnittstelle und der zweiten Schnittstelle über einen Fahrerbereich eines Innenraums des Fahrzeugs (100) schließbar ist.

6. Vorrichtung (130) gemäß einem der Ansprüche 2 bis 5, **dadurch gekennzeichnet, dass** die elektrische Schaltung (160) ausgebildet ist, um die Funktion des zumindest einen Wählschalters (142) in Abhängigkeit von einer Art einer durch den zumindest einen Wählschalter (142) wählbaren Betriebsart freizugeben.

7. Vorrichtung (130) gemäß einem der vorangegangenen Ansprüche, **dadurch gekennzeichnet, dass** die Vorrichtung (130) einen Bewegungssensor zum Freigeben der Funktion des zumindest einen Wählschalters (142) an einer Betätigungseinrichtung (104) für eine Betriebsbremse des Fahrzeugs (100) aufweist.

8. System (110) zum Einstellen einer Betriebsart eines Getriebes (102) eines Fahrzeugs (100), wobei das System (110) eine Vorrichtung (130) zum Wählen einer Betriebsart des Getriebes und eine Vorrichtung (120) zum Steuern des Getriebes (102) aufweist, **dadurch gekennzeichnet, dass** es sich bei der Vorrichtung (130) zum Wählen um die Vorrichtung (130) gemäß einem der vorangegangenen Ansprüche handelt, wobei die Vorrichtung (120) zum Steuern ausgebildet ist, um zum Einstellen der Betriebsart das Getriebe (102) in Abhängigkeit von einer mittels der Vorrichtung (130) zum Wählen gewählten Betriebsart zu steuern.

9. Verfahren (200) zum Wählen einer Betriebsart eines Getriebes (102) eines Fahrzeugs (100), wobei das Verfahren (200) in Verbindung mit einer Vorrichtung (130) zum Wählen einer Betriebsart des Getriebes (102) ausgeführt wird, wobei die Vorrichtung (130) ein Bedienfeld (140) mit zumindest einem Wählschalter (142) zum Wählen einer Betriebsart und einem Freigabeschalter (144) zum Freigeben einer Funktion des zumindest einen Wählschalters (142) aufweist, wobei das Verfahren (200) folgende Schritte aufweist:
Einlesen (210) eines Freigabesignals von dem Freigabeschalter (144), wobei der Freigabeschalter (144) einen berührungsempfindlichen Tastenschalter als eine erste Schnittstelle zu einem Sensorstromkreis (150) zum Freigeben der Funktion des zumindest einen Wählschalters (142) aufweist, wobei der Sensorstromkreis (150) eine zweite Schnittstelle (152) an einer Betätigungseinrichtung (104) für eine Fahrfunktion des Fahrzeugs (100) aufweist, wobei der Sensorstromkreis (150) durch Herstellen einer elektrisch leitfähigen Verbindung zwischen der ersten Schnittstelle und der zweiten Schnittstelle (152) über einen Fahrerbereich eines Innenraums des Fahrzeugs (100) schließbar ist, wobei die erste Schnittstelle und die zweite Schnittstelle (152) ausgebildet sind, um bei Berührung der ersten Schnittstelle und der zweiten Schnittstelle (152) durch einen Fahrer des Fahrzeugs (100) den Sensorstromkreis (150) durch den Fahrer des Fahrzeugs (100) hindurch zu schließen; und
Erzeugen (220) eines Wählsignals, das eine gewählte Betriebsart des Getriebes (102) repräsentiert, in Abhängigkeit von dem Freigabesignal und einem Betätigungssignal von dem zumindest einen Wählschalter.

## Claims

1. Device (130) for selecting a mode of operation of a transmission (102) of a vehicle (100), wherein the device (130) has a control panel (140) having at least one selector switch (142) for selecting a mode of operation and an activation switch (144) for activating a function of the at least one selector switch (142), wherein the activation switch (144) has a touch-sensitive touch switch as a first interface to a sensor circuit (150) for activating the function of the at least one selector switch (142), wherein the sensor circuit (150) has a second interface (152) to an actuation apparatus (104) for a driving function of the vehicle (100), wherein the sensor circuit (150) is able to be closed by creating an electrically conductive connection between the first interface and the second interface (152) across a driver's region of an interior of the vehicle (100), **characterized in that** the first interface and the second interface (152) are designed so as to close the sensor circuit (150) through a driver of the vehicle (100) when the first interface and the second interface (152) are touched by a driver of the vehicle (100).

2. Device (130) according to Claim 1, **characterized by** an electrical circuit (160) having a detection apparatus (162) for detecting an electric current in the sensor circuit (150), wherein the electrical circuit (160) is designed to activate the function of the at least one selector switch (142) depending on the detected current in the sensor circuit (150).

3. Device (130) according to Claim 2, **characterized in that** the electrical circuit (160) is designed to activate the function of the at least one selector switch (142) when an electric current is detected in the sensor circuit (150) by the detection apparatus (162) when the sensor circuit (150) is closed.

4. Device (130) according to one of the preceding claims, **characterized in that** the actuation apparatus (104) is an actuation apparatus for a service brake of the vehicle (100).

5. Device (130) according to one of the preceding claims, **characterized by** a further sensor circuit for activating the function of the at least one selector switch (142), wherein the activation switch (144) represents a first interface of the further sensor circuit, wherein the further sensor circuit has a second interface to an actuation apparatus for an engine power of the vehicle (100), wherein the further sensor circuit is able to be closed by creating an electrically conductive connection between the first interface and the second interface across a driver's region of an interior of the vehicle (100).

6. Device (130) according to one of Claims 2 to 5, **characterized in that** the electrical circuit (160) is designed to activate the function of the at least one selector switch (142) depending on a type of mode of operation able to be selected by way of the at least one selector switch (142).

7. Device (130) according to one of the preceding claims, **characterized in that** the device (130) has a motion sensor for activating the function of the at least one selector switch (142) on an actuation apparatus (104) for a service brake of the vehicle (100) .

8. System (110) for setting a mode of operation of a transmission (102) of a vehicle (100), wherein the system (110) has a device (130) for selecting a mode of operation of the transmission and a device (120) for controlling the transmission (102), **characterized in that** the selection device (130) is the device (130) according to one of the preceding claims, wherein the control device (120) is designed to control the transmission (102) depending on a mode of operation selected by way of the selection device (130) so as to set the mode of operation.

9. Method (200) for selecting a mode of operation of a transmission (102) of a vehicle (100), wherein the method (200) is executed in connection with a device (130) for selecting a mode of operation of the transmission (102), wherein the device (130) has a control panel (140) having at least one selector switch (142) for selecting a mode of operation and an activation switch (144) for activating a function of the at least one selector switch (142), wherein the method (200) comprises the following steps:
reading (210) an activation signal from the activation switch (144), wherein the activation switch (144) has a touch-sensitive touch switch as a first interface to a sensor circuit (150) for activating the function of the at least one selector switch (142), wherein the sensor circuit (150) has a second interface (152) to an actuation apparatus (104) for a driving function of the vehicle (100), wherein the sensor circuit (150) is able to be closed by creating an electrically conductive connection between the first interface and the second interface (152) across a driver's region of an interior of the vehicle (100), wherein the first interface and the second interface (152) are designed so as to close the sensor circuit (150) through a driver of the vehicle (100) when the first interface and the second interface (152) are touched by a driver of the vehicle (100); and
generating (220) a selection signal that represents a selected mode of operation of the transmission (102), depending on the activation signal and an actuation signal from the at least one selector switch.

## Revendications

1. Dispositif (130) de sélection d'un mode de fonctionnement d'une boîte de vitesses (102) d'un véhicule (100), dans lequel le dispositif (130) comporte un tableau de commande (140) doté d'au moins un commutateur de sélection (142) destiné à sélectionner un mode de fonctionnement, et un commutateur d'enclenchement (144) destiné à enclencher une fonction dudit au moins un commutateur de sélection (142), dans lequel le commutateur d'enclenchement (144) comprend un commutateur à bouton tactile comme première interface avec un circuit de détection (150) pour enclencher la fonction dudit au moins un commutateur de sélection (142), dans lequel le circuit de détection (150) comporte une seconde interface (152) sur un dispositif d'actionnement (104) pour une fonction de conduite du véhicule (100), dans lequel le circuit de détection (150) peut être fermé par établissement d'une liaison électriquement conductrice entre la première interface et la seconde interface (152), à travers une zone de conducteur d'un habitacle du véhicule (100), **caractérisé en ce que** la première interface et la seconde interface (152) sont conçues pour la fermeture du circuit de détection (150) par le conducteur du véhicule (100) lorsque le conducteur du véhicule (100) touche la première interface et la seconde interface (152) .

2. Dispositif (130) selon la revendication 1, **caractérisé par** un circuit électrique (160) doté d'un dispositif de détection (162) destiné à détecter un courant électrique dans le circuit de détection (150), dans lequel le circuit électrique (160) est conçu pour enclencher la fonction dudit au moins un commutateur de sélection (142) en fonction du courant détecté dans le circuit de détection (150).

3. Dispositif (130) selon la revendication 2, **caractérisé en ce que** le circuit électrique (160) est conçu pour enclencher la fonction dudit au moins un commutateur de sélection (142) lorsqu'un courant électrique est détecté dans le circuit de détection (150) par le dispositif de détection (162) à l'état fermé du circuit de détection (150).

4. Dispositif (130) selon l'une des revendications précédentes, **caractérisé en ce que** le dispositif d'actionnement (104) est un dispositif d'actionnement destiné à un frein de service du véhicule (100).

5. Dispositif (130) selon l'une des revendications précédentes, **caractérisé par** un autre circuit de détection destiné à enclencher la fonction dudit au moins un commutateur de sélection (142), dans lequel le commutateur d'enclenchement (144) représente une première interface de l'autre circuit de détection, dans lequel l'autre circuit de détection comporte une seconde interface sur un dispositif d'actionnement pour une puissance du moteur du véhicule (100), dans lequel l'autre circuit de détection peut être fermé par établissement d'une liaison électriquement conductrice entre la première interface et la seconde interface à travers une zone de conducteur d'un habitacle du véhicule (100).

6. Dispositif (130) selon l'une des revendications 2 à 5, **caractérisé en ce que** le circuit électrique (160) est conçu pour enclencher la fonction dudit au moins un commutateur de sélection (142) en fonction d'un type d'un mode de fonctionnement pouvant être sélectionné par ledit au moins un commutateur de sélection (142).

7. Dispositif (130) selon l'une des revendications précédentes, **caractérisé en ce que** le dispositif (130) comprend un capteur de mouvement destiné à enclencher la fonction dudit au moins un commutateur de sélection (142) sur un dispositif d'actionnement (104) destiné à un frein de service du véhicule (100).

8. Système (110) de réglage d'un mode de fonctionnement d'une boîte de vitesses (102) d'un véhicule (100), dans lequel le système (110) comprend un dispositif (130) de sélection d'un mode de fonctionnement de la boîte de vitesses et un dispositif (120) de commande de la boîte de vitesses (102), **caractérisé en ce que** le dispositif (130) de sélection est le dispositif (130) selon l'une des revendications précédentes, dans lequel le dispositif (120) de commande est conçu pour régler le mode de fonctionnement de la boîte de vitesses (102) en fonction d'un mode de fonctionnement sélectionné au moyen du dispositif de sélection (130).

9. Procédé (200) de sélection d'un mode de fonctionnement d'une boîte de vitesses (102) d'un véhicule (100), dans lequel le procédé (200) est mis en oeuvre en association avec un dispositif (130) de sélection d'un mode de fonctionnement de la boîte de vitesses (102), dans lequel le dispositif (130) comporte un tableau de commande (140) doté d'au moins un commutateur de sélection (142) destiné à sélectionner un mode de fonctionnement, et un commutateur d'enclenchement (144) destiné à enclencher une fonction dudit au moins un commutateur de sélection (142), dans lequel le procédé (200) comprend les étapes consistant à :
lire (210) un signal d'enclenchement provenant du commutateur d'enclenchement (144), dans lequel le commutateur d'enclenchement (144) comprend un commutateur à bouton tactile comme première interface avec un circuit de détection (150) pour enclencher la fonction dudit au moins un commutateur de sélection (142), dans lequel le circuit de détection (150) comporte une seconde interface (152) sur un dispositif d'actionnement (104) pour une fonction de conduite du véhicule (100), dans lequel le circuit de détection (150) peut être fermé par établissement d'une liaison électriquement conductrice entre la première interface et la seconde interface (152), à travers une zone de conducteur d'un habitacle du véhicule (100), dans lequel la première interface et la seconde interface (152) sont conçues pour la fermeture du circuit de détection (150) par le conducteur du véhicule (100) lorsque le conducteur du véhicule (100) touche la première interface et la seconde interface (152) ; et
générer (220) un signal de sélection qui représente un mode de fonctionnement sélectionné de la boîte de vitesses (102) en fonction du signal d'enclenchement et d'un signal d'actionnement provenant dudit au moins un commutateur de sélection.
